# EUROPEAN PATENT SPECIFICATION

(11) **EP 1 272 036 B1**
(45) Date of publication and mention of the grant of the patent: **25.05.2005**
(21) Application number: 01927825.8
(22) Date of filing: 28.03.2001
(51) Int. Cl.: A01N 43/90

(54) **COMPOSITIONS COMPRISING PYROQUILON AND NEONICOTINOIDS COMPOUNDS**
PYROQUILON UND NEONICOTINIODVERBINDUNGEN ENTHALTENDE ZUSAMMENSETZUNGEN
COMPOSITIONS CONTENANT DES COMPOSES DE PYROQUILON ET DE NEONICOTINOIDES

(30) Priority: 30.03.2000 GB 0007910
(43) Date of publication of application: 08.01.2003
(73) Proprietor: Syngenta Participations AG, 4058 Basel (CH)
(72) Inventor: WEISS, Martin, CB2 5EN Cambridge (GB); CORTADA, Raul, Vicente, CH-4410 Liestal (CH)
(74) Representative: Waterman, John Richard
(86) International application number: PCT/EP2001/003540
(87) International publication number: WO 2001/072128

(56) References cited:
- DE-A- 19 823 396
- US-A- 4 731 385
- DATABASE CHEMABS [Online] CHEMICAL ABSTRACTS SERVICE, COLUMBUS, OHIO, US; retrieved from STN-INTERNATIONAL, accession no. 131:166500 CA XP002176527 & JP 11 222406 A (SANKYO) 17 August 1999 (1999-08-17)
- DATABASE CHEMABS [Online] CHEMICAL ABSTRACTS SERVICE, COLUMBUS, OHIO, US; retrieved from STN-INTERNATIONAL, accession no. 110:130500 CA XP002176528 & JP 63 156705 A (NIHON TOKUSHU NOYAKU) 29 June 1988 (1988-06-29) & DATABASE WPI Week 198832 Derwent Publications Ltd., London, GB; AN 1998-222993
- DATABASE CHEMABS [Online] CHEMICAL ABSTRACTS SERVICE, COLUMBUS, OHIO, US; retrieved from STN-INTERNATIONAL, accession no. 115:87524 CA XP002176529 & JP 03 047106 A (NIHON TOKUSHU ) 28 February 1991 (1991-02-28) & PATENT ABSTRACTS OF JAPAN vol. 0151, no. 89 (C-0831), 15 May 1991 (1991-05-15) JP
- DATABASE CHEMABS [Online] CHEMICAL ABSTRACTS SERVICE, COLUMBUS, OHIO, US; retrieved from STN-INTERNATIONAL, accession no. 126:15863 CA XP002176530 & JP 08 245322 A (MITSUI TOATSU CHEMICALS) 24 September 1996 (1996-09-24) & PATENT ABSTRACTS OF JAPAN vol. 1997, no. 01, 31 January 1997 (1997-01-31) JP
- DATABASE CHEMABS [Online] CHEMICAL ABSTRACTS SERVICE, COLUMBUS, OHIO, US; retrieved from STN-INTERNATIONAL, accession no. 122:125942 CA XP002176531 & JP 06 329507 A (NIHON TOKUSHU NOYAKU SEIZO) 29 November 1994 (1994-11-29) & PATENT ABSTRACTS OF JAPAN vol. 1995, no. 02, 31 March 1995 (1995-03-31) JP
- DATABASE CHEMABS [Online] CHEMICAL ABSTRACTS SERVICE, COLUMBUS, OHIO, US; retrieved from STN-INTERNATIONAL, accession no. 109:165737 CA XP002176532 & JP 63 072610 A (NIHON TOKUSHU NOYAKU SEIZO) 2 April 1988 (1988-04-02) & PATENT ABSTRACTS OF JAPAN vol. 0123, no. 01 (C-521), 16 August 1988 (1988-08-16) JP
- PATENT ABSTRACTS OF JAPAN vol. 0031, no. 38 (C-064), 16 November 1979 (1979-11-16) & JP 54 117028 A (KUMIAI CHEM IND), 11 September 1979 (1979-09-11)
- PATENT ABSTRACTS OF JAPAN vol. 1999, no. 13, 30 November 1999 (1999-11-30) & JP 11 236301 A (CHISSO), 31 August 1999 (1999-08-31)

## Description

The present invention relates to a composition that comprises one or more fungicidal compounds and one or more insectidical or acaricidal compounds and that is suitable for controlling simultaneously insects and/or representatives of the order Acarina and microorganisms, especially phytopathogenic fungi, for example on plants or for seed dressing, to a method of controlling those pests, to a process for the preparation of the appropriate composition and to the use thereof.

Certain mixtures of active ingredients for controlling pests are described in the literature. US 4,731,385 discloses a composition comprising a nitromethylene derivative in combination with, *inter alia*, pyroquilon. JP 63 1567.5 discloses a composition comprising an imino-substituted heterocyclic compound in combination with, *inter alia*, pyroquilon. JP 03 047106 discloses a composition comprising a chloro-substituted pyridine in combination with, *inter alia*, pyroquilon. JP 06 329507 discloses a composition comprising a triazine in combination with, *inter alia*, pyroquilon. JP 63 072610 discloses a composition comprising, *inter alia,* pyroquilon and a nitromethylene derivative. '

The biological properties of those known mixtures are not entirely satisfactory in the area of pest control and there is therefore a need to make available other mixtures, especially those having synergistic properties, for example synergistic pesticidal properties, especially for controlling microorganisms and insects and representatives of the order Acarina. That problem is solved according to the invention by the provision of the present composition.

The invention accordingly relates to a composition for controlling plant diseases and infestations by microorganisms in plants, in plant propagation material or other plant material and for controlling insects or representatives of the order Acarina, which composition comprises at least one compound of formula (I), 1,2,5,6-tetrahydro-4H-pyrrolo-[3,2,1-ij]quinolin-4-one (pyroquilon) 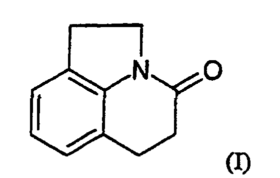 and at least one neonicotinoid compound of formula (II) 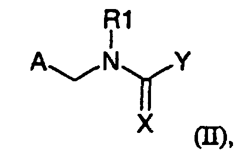 wherein
A is 2-chloropyrid-5-yl, 2-methylpyrid-5-yl, 1-oxido-3-pyridinio, 2-chloro-1-oxido-5-pyridinio, 2,3-dichloro-1-oxido-5-pyridinio, tetrahydrofuran-3-yl, 5-methyl-tetrahydrofuran-3-yl or 2-chlorothiazol-5-yl group,
R is hydrogen, C₁-C₆alkyl, phenyl-C₁-C₄alkyl, C₃-C₆cycloalkyl, C₂-C₆alkenyl or C₂-C₆alkynyl;
Y is -N(R)(R₂); SR₂; or C₁-C₁₂alkyl
R₁ and R₂ are independently of each other hydrogen, C₁-C₄alkyl, C₁-C₄alkenyl, C₁-C₄alkinyl , -C(=O)-CH₃ or benzyl; or together form a group -CH₂-CH₂-, -CH₂-CH₂-CH₂-, -CH₂-O-CH₂-, -CH₂-S-CH₂-, -CH₂-NH-CH₂- or -CH₂-N(CH₃)-CH₂-; and
X is N-NO₂ , N-CN or CH-NO₂; or, where appropriate, a tautomer thereof, in each case in free from or in salt form, and at least one adjuvant, and where appropriate, at least one further insecticidal or fungicidal compound.
The invention also relates to a method to control or preventing of diseases and of insect attack in plants to improve the growth of plants wherein a composition comprising a compound of formula (I) and a compound of formula (II) is applied to the plant or the locus thereof.

A preferred embodiment of the invention relates to a method wherein the composition comprises a compound of the formula (I) and wherein the compound of formula (II) is selected from
IIA) Thiamethoxam, 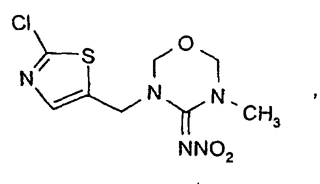 known from EP-A-580553; or
IIB) Clothianidin (Ti-435), 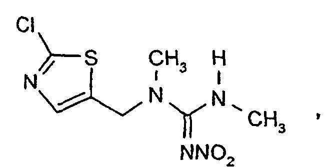 known from EP-375907; or
IIC) MTI-446, 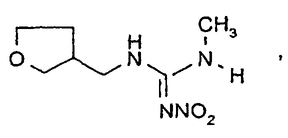 known from EP-649 845

Some of the compounds of formula (II) may be in the form of tautomers. Accordingly, hereinbefore and hereinafter, where appropriate the compounds of formula (II) are to be understood to include corresponding tautomers, even if the latter are not specifically mentioned in each case.

Compounds of formula (II) having at least one basic center are capable, for example, of forming acid addition salts. Those salts are formed, for example, with strong inorganic acids, such as mineral acids, for example perchloric acid, sulfuric acid, nitric acid, nitrous acid, a phosphoric acid or a hydrohalic acid, with strong organic carboxylic acids; such as unsubstituted or substituted, for example halo-substituted, C₁-C₄alkanecarboxylic acids, for example acetic acid, saturated or unsaturated dicarboxylic acids, for example oxalic, malonic, succinic, maleic, fumaric or phthalic acid, hydroxycarboxylic acids, for example ascorbic, lactic, malic, tartaric or citric acid, or benzoic acid, or with organic sulfonic acids, such as unsubstituted or substituted, for example halo-substituted, C₁-C₄alkane- or aryl-sulfonic acids, for example methane- or p-toluene-sulfonic acid. Furthermore, compounds of formula (II) having at least one acid group are capable of forming salts with bases. Suitable salts with bases are, for example, metal salts, such as alkali metal or alkaline earth metal salts, for example sodium, potassium or magnesium salts, or salts with ammonia or an organic amine, such as morpholine, piperidine, pyrrolidine, a mono-, di- or tri-lower alkylamine, for example ethyl-, diethyl-, triethyl- or dimethyl-propyl-amine, or a mono-, di- or tri-hydroxy-lower alkylamine, for example mono-, di- or tri-ethanolamine. In addition, corresponding internal salts may also be formed. Preference is given within the scope of the invention to agrochemically advantageous salts. In view of the close relationship between the compounds of formula (I) in free form, any reference hereinbefore or hereinafter to the free compounds of formula (II) or to their salts is to be understood as including also the corresponding salts or the free compounds of formula (II), where appropriate and expedient. The same applies in the case of tautomers of compounds of formula (II) and the salts thereof. The free form is generally preferred in each case.

The novel compositions consisting of component (I) and component (II) are suitable for foliar application for living cultivated plants, in water application, as well as, in particular, for dressing applications for plant propagation material. This latter term embraces seeds of all kinds (fruits, tubers, grains), cuttings, cut shoots. The preferred field of application is the treatment of all kinds of seeds, in particular the seed treatment of cereal and rice.

This invention makes seed dressing possible using substantially lower amounts of biocides than customary hitherto and therefore constitutes a very substantial enrichment of the technology.

In addition to the two-component composition I+II, this invention also relates to a method of controlling fungi and insects, which comprises treating a site, for example a plant, that is infested, or liable to be infested by fungi and insects with a) the active ingredient of formula (I) and with b) the active ingredient of formula (II) in any desired sequence at the same day or simultaneously.

It is also possible to add to the novel active ingredient composition further agrochemical active ingredients such as fungicides, insecticides, nematicides, herbicides, growth regulators and fertilizers.

The combination of the active components (I) and (II) according to the invention achieves useful contact action as well as systemic and long term action in the control of the seed- and soil-borne plant diseases. The novel combination destroy the microorganisms and the insects in stored food and plant propagation material, in particular in seeds, and protect the developing plants from attack by soil-borne microorganisms and insects.

The novel active ingredient compositions I+II have very advantageous curative, preventive and systemic fungicidal and insecticidal properties for protecting cultivated plants. As has been mentioned, said active ingredient compositions can be used to inhibit or destroy the microorganism or insects that occur on plants or parts of plants (fruit, blossoms, leaves, stems, tubers, roots) of different crops of useful plants, while at the same time those parts of plants which grow later are also protected from attack by such microorganisms or insects.

The action of the novel compositions of compounds I+II is particularly pronounced against rice diseases or rice insects such as *Pyricularia aryzae*, *Cochliobolus miyabeanus*, *Pellicularia sasakii*, *Rhizoctonia spp.*, against rice bacteria such as *Xanthomonas oryzae* and rice insects such as *Nilaparvata lugens*, *Laodelphax striatellus*, *Segatella furcifera*, *Nephotettix cincticeps*, *Oulema oryzae*, *Lissorhoptrus oryzophilus* and *Leptocorisa oratoria*. However, said combinations are also suitable for the direct treatment of the soil or other parts of the plants. They are well tolerated by plants and are ecologically safe.

It has now been found, surprisingly, that the compositions according to the invention not only bring about the additive enhancement of the biocidal and physical properties of the individual active ingredients they contain that was in principle to be expected, but achieve a synergistic effect which, *inter alia,* extends the boundaries of the pesticidal activity of the compounds.

In particular, it has now be found, surprisingly, that, for example, the pesticidal activity of the composition according to the invention, compared with the pesticidal activity of the individual components, is not merely additive, as may essentially be expected, but that a synergistic effect exists. The term "synergistic" is not, however, in any way limited in this context to the pesticidal activity, but refers equally to other advantageous properties of the compositions according to the invention as compared with the individual components. Examples of such advantageous properties that may be mentioned are : a broadening of the spectrum of pesticidal activity to other pests, for example to resistant strains, a reduction in the rate of application of the compounds of the formulae, adequate control of the pests with the aid of the compositions according to the invention, even at a rate of application at which the individual compounds are totally ineffective; advantageous behavior during formulating and/or upon application, for example upon grinding, sieving, emulsifying, dissolving or dispersing; increase storage stability; improved stability to light; more advantageous degradability; improved toxicological and/or ecotoxicological behavior, or other advantages familiar to a person skilled in the art.

Surprisingly, it has been found that the application of the composition comprising the compounds of the formula (I) and the formula (II) to the plants or the locus thereof results in a quite unexpectedly enhanced plant growth. It has now been found, that the action of the composition comprising the compounds of the formula (I) and the formula (II) goes far beyond their well-known pesticidal action. It has been shown, that the composition comprising the compounds of the formula (I) and the formula (II) exhibit an action termed plant growth in the frame of the instant invention. Under the term plant growth there are understood various sorts of improvements of plants which are not connected to the control of pests with the said composition comprising the compounds of the formula (I) and the formula (II). For example such advantageous properties that may be mentioned are improved crop characteristics including: emergence, crop yields, protein content, more developed root system, tillering increase, increase in plant height, bigger leaf blade, less dead basal leaves, stronger tillers, greener leaf color, less fertilizers needed, less seeds needed, more productive tillers, earlier flowering, early grain maturity, less plant verse (lodging), increased shoot growth, improved plant vigor, and early germination; or any other advantages familiar to a person skilled in the art.

Especially preferred is the use of the said neonicotinoid compounds (II) in a method for the improvement of the growth plants which are essentially free of insects and representatives of the order Acarina.

It has been shown, that the composition comprising the compounds of the formula (I) and the formula (II) have a good effect on the plant growth. As a rule, a good effect means at least 10% earlier emergence, crop yields, more developed root system, increase in plant height, bigger leaf blade, less fertilizers needed, less seeds needed increased shoot growth, improved pant vigor etc.

A further aspect of the invention is a method of using a neonicotinoid compound (II) in a method for improving the growth of plants.

A further aspect of the invention is the use of a neonicotinoid compound (II) in a method for improving the growth of plants.

Still a further aspect of the invention is a method of using a composition comprising a neonicotinoid compound (II) in a method for improving the growth of plants.

The present invention provides a new method of improving plant growth, more specifically, a method for improving plant growth of crops such as canola (rape) seed, eggplants, rice, potatoes and soybeans, wherein at least one neonicotinoid compound (II) is applied to the plant or the locus thereof.

In the area of pest control, the compositions according to the invention are valuable preventive and/or curative ingredients having a very advantageous biocidal spectrum even at low rates of concentration, while being well tolerated by warm-blooded animals, fish and plants. The compositions of the invention are effective against all or individual development stages of normally sensitive animal pests, but also of resistant animal pests, such as phytopathogenic fungi, and insects and representatives of the order Acarina. The insecticidal and/or acaricidal action of the compositions of the invention may manifest itself directly, i.e. in the mortality of the pests, which occurs immediately or only after some time, for example during moulting, or indirectly, for example in reduced oviposition and/or a reduced hatching rate, the good activity corresponding to a mortality of at least 50 to 60%.

The mentioned animal pests include, for example:
of the order *Lepidoptera*, for example,
   *Acleris spp.*, *Adoxophyes spp.*, *Aegeria spp.*, *Agrotis spp.*, *Alabama argillaceae*, *Amylois spp.*, *Anticarsia gemmatalis*, *Archips spp.*, *Argyrotaenia spp.*, *Autographa spp.*, *Busseola fusca, Cadra cautella, Carposina nipponensis, Chilo spp, Choristoneura spp., Clysia ambiguella, Cnaphalocrocis spp., Cnephasia spp., Cochylis spp., Coleophora spp., Crocidolomia binotalis, Cryptophlebia leucotreta, Cydia spp., Diatraea spp., Diparopsis castanea, Earias spp., Ephestia spp., Eucosma spp., Eupoecilia ambiguella, Euproctis spp., Euxoa spp., Grapholita spp., Hedya nubiferana, Heliothis spp., Hellula undalis, Hyphantria cunea, Keiferia lycopersicella, Leucoptera scitella, Lithocollethis spp., Lobesia botrana, Lymantria spp., Lyonetia spp., Malacosoma spp., Mamestra brassicae, Manduca sexta, Operophtera spp., Ostrinia nubilalis. Pammene spp., Pandemis spp., Panolis flammea, Pectinophora gossypiella, Phthorimaea operculella, Pieris rapae, Pieris spp., Plutella xylostella, Prays spp., Scirpophaga spp., Sesamia spp., Sparganothis spp., Spodoptera spp., Synanthedon spp., Thaumetopoea spp., Tortrix spp., Trichoplusia ni* and *Yponomeuta spp.*;
of the order *Coleoptera*, for example,
   *Agriotes spp., Anthonomus spp., Atomaria linearis, Chaetocnema tibialis, Cosmopolites spp., Curculio spp., Dermestes spp., Diabrotica spp., Epilachna spp., Eremnus spp., Leptinotarsa decemlineata, Lissorhoptrus spp., Melolontha spp., Orycaephilus spp., Otiorhynchus spp., Phlyctinus spp., Popillia spp., Psylliodes spp., Rhizopertha spp., Scarabeidae, Sitophilus spp., Sitotroga spp., Tenebrio spp., Tribolium spp.* and *Trogoderma spp.*;
of the order *Orthoptera*, for example,
   *Blatta spp., Blattella spp., Gryllotalpa spp., Leucophaea maderae, Locusta spp., Periplaneta spp.* and *Schistocerca spp.*;
of the order *Isoptera*, for example,
   *Reticulitermes spp.*;
of the order *Psocoptera*, for example,
   *Liposcelis spp.*;
of the order *Anoplura*, for example,
   *Haematopinus spp., Linognathus spp., Pediculus spp., Pemphigus spp. and Phylloxera spp.*;
of the order *Mallophaga*, for example,
   *Damalinea spp.* and *Trichodectes spp.*;
of the order *Thysanoptera*, for example,
   *Frankliniella spp.*, *Hercinothrips spp., Taeniothrips spp., Thrips palmi, Thrips tabaci* and *Scirtothrips aurantii*;
of the order *Heteroptera*, for example,
   *Cimex spp., Distantiella theobroma, Dysdercus spp., Euchistus spp., Eurygaster spp., Leptocorisa spp., Nezara spp., Piesma spp., Rhodnius spp., Sahlbergella singularis, Scotinophara spp.* and *Triatoma spp.*;
of the order *Homoptera*, for example,
   *Aleurothrixus floccosus, Aleyrodes brassicae, Aonidiella spp., Aphididae, Aphis spp., Aspidiotus spp., Bemisia tabaci, Ceroplaster spp., Chrysomphalus aonidium, Chrysomphalus dictyospermi, Coccus hesperidum, Empoasca spp., Eriosoma larigerum, Erythroneura spp., Gascardia spp., Laodelphax spp., Lecanium corni, Lepidosaphes spp., Lema spp., Macrosiphus spp., Myzus spp., Nephotettix spp., Nilaparvata spp., Paratoria spp., Pemphigus spp., Planococcus spp., Pseudaulacaspis spp., Pseudococcus spp., Psylla spp., Pulvinaria aethiopica, Quadraspidiotus spp., Rhopalosiphum spp., Saissetia spp., Scaphoideus spp., Schizaphis spp., Sitobion spp., Sogatella spp., Trialeurodes vaporariorum, Trioza erytreae* and *Unaspis citri*;
of the order *Hymenoptera*, for example,
   *Acromyrmex, Atta spp., Cephus spp., Diprion spp., Diprionidae, Gilpinia polytoma, Hoplocampa spp., Lasius spp., Monomorium pharaonis, Neodiprion spp.*, *Solenopsis spp.* and *Vespa spp.*;
of the order *Diptera*, for example,
   *Aedes spp., Antherigona soccata, Bibio hortulanus, Calliphora erythrocephala, Ceratitis spp., Chrysomyia spp., Culex spp., Cuterebra spp., Dacus spp., Drosophila melanogaster, Fannia spp., Gastrophilus spp., Glossina spp., Hypoderma spp., Hyppobosca spp., Liriomyza spp., Lucilia spp., Melanagromyza spp., Musca spp., Oestrus spp., Orseolia spp., Oscinella frit, Pegomyia hyoscyami, Phorbia spp., Rhagoletis pomonella, Sciara spp., Stomoxys spp., Tabanus spp., Tannia spp.* and *Tipula spp.*;
of the order *Siphonaptera*, for example,
   *Ceratophyllus spp. and Xenopsylla cheopis*;
of the order *Thysanura*, for example,
   *Lepisma saccharina*;
of the order *Acarina*, for example,
   *Acarus siro, Aceria sheldoni, Aculus schlechtendali, Amblyomma spp., Argas spp., Boophilus spp., Brevipalpus spp., Bryobia praetiosa, Calipitrimerus spp., Chorioptes spp., Dermanyssus gallinae, Eotetranychus carpini, Eriophyes spp., Hyalomma spp., Ixodes spp., Olygonychus pratensis, Ornithodoros spp., Panonychus spp., Phyllocoptruta oleivora, Polyphagotarsonemus latus, Psoroptes spp., Rhipicephalus spp., Rhizoglyphus spp., Sarcoptes spp., Tarsonemus spp.* and *Tetranychus spp.*.

The mentioned phytopathogenic fungi include, for example:
of the class of the *Fungi imperfecti*, for example,
   *Botrytis spp., Pyricularia spp., Helminthosporium spp., Fusarium spp., Septoria spp., Cercospora spp.* and *Altemaria spp.*;
of the class of the *Basidiomycetes*, for example,
   *Rhizoctonia spp., Hemileia spp.* and *Puccinia spp.*;
of the class of the *Ascomycetes*, for example, *Venturia spp., Erysiphe spp., Podosphaera spp., Monilinia spp.* and *Uncinula spp.*; and
of the class of the *Oomycetes*, for example,
   *Phytophthora spp., Pythium spp.* and *Plasmopara spp.*.

With the compositions according to the invention it is possible especially to control, i.e. to inhibit or destroy, pests of the mentioned type occurring on plants, especially on useful plants and ornamentals in agriculture, in horticulture and in forestry, or on parts of such plants, such as the fruit, blossom, leaves, stems, tubers or roots, while in some cases the parts of the plants which grow later are also still protected against those pests.

Target crops are especially cereals, such as wheat, barley, rye, oats, rice, maize and sorghum; beet, such as sugar beet and fodder beet; fruit, such as pomes, stone fruit and soft fruit, such as apples, pears, plums, peaches, almonds, cherries, or berries, for example strawberries, raspberries or blackberries; leguminous plants, such as beans, lentils, peas and soybeans; oil plants, such as rape, mustard, poppy, olives, sunflowers, coconut, castor oil plants, cocoa beans and groundnuts; cucumber plants, such as marrows, cucumbers and melons; fibre plants, such as cotton, flax, hemp and jute; citrus fruit, such as oranges, lemons, grapefruit and mandarins; vegetables, such as spinach, lettuce, asparagus, cabbages, carrots, onions, tomatoes, potatoes and paprika; lauraceae, such as avocados, cinnamon and camphor; and tobacco, nuts, coffee, aubergines, sugar cane, tea, pepper, vines, hops, bananas and natural rubber plants, as well as ornamentals. Preference is given especially to the control of pests and microorganisms on wheat, barley, rape, maize, rice and sugar beet.

The compositions of the invention are suitable especially for controlling insects and in representatives of the order *Acarina*, especially plant-destructive feeding insects, such as *Anthonomus grandis*, *Diabrotica balteata*, *Heliothis virescens larvae*, *Plutella xylostella* and *Spodoptera littoralis larvae*, and spider mites, such as *Tetranychus spp.*, in cotton, fruit, maize, soybean, rape, rice and vegetable crops.
Further areas of use of the compounds according to the invention are the protection of stored goods and stocks and materials, and also in the hygiene sector, especially the protection of domestic animals and productive livestock against pests of the mentioned type.

The compositions according to the invention are also suitable for the treatment of plant propagation material, including genetically modified propagation material, e.g. seed, such as fruit, tubers or grains, or plant cuttings, The propagation material may be treated with the composition before planting, for example seed may be dressed before sowing. The compounds according to the invention may also be applied to seed grains (coating) either by impregnating the grains with a liquid formulation or by coating them with a solid formulation. The composition may also be applied to the planting site when the propagation material is being planted, for example may be applied to the seed furrow during sowing. The invention relates also to that method of treating plant propagation material and to the plant propagation material so treated.

The composition comprising the compounds of formula (I) and compounds of the formula (II) are normally applied to plant propagation material in the form of compositions, but also can be applied to the seed or to the locus of propagation thereof (such as a furrow), simultaneously or in succession, with further compounds. These further compounds can be fertilizers or micronutrient donors or other preparations that influence plant growth. They can also be selective pesticides or mixtures of several of these preparations, if desired together with further carriers, surfactants or application-promoting adjuvants customarily employed in the art of formulation.

The techniques of seed treatment application are well known to those skilled in the art, and they may be used readily in the context of the present invention. The composition comprising the compounds of the formula (I) and of formula (II) can be formulated and applied as a slurry, a solid seed coating, a soak, or as a dust on the surface of the seed. There also may be mentioned, e.g., film-coating or encapsulation. The coating processes are well known in the art, and employ, for seeds, the techniques of film-coating or encapsulation, or for the other multiplication products, the techniques of immersion. Needless to say, the method of application of the compounds to the seed may be varied and the invention is intended to include any technique which is to be used.

A preferred method of applying the mixture to the plant propagation material according to the invention consists in spraying or wetting the plant propagation material with a liquid preparation, or mixing the plant material with a solid preparation of the composition comprising the compounds of the formula (I) and of formula (II).

Another preferred embodiment of the invention is the use, the method of use and the method of controlling pests of the composition comprising the compounds of formula (I) and of formula (II) in the seedling box technique.

The composition according to the invention is therefore an emulsifiable concentrate, a suspension concentrate, a directly sprayable or dilutable solution, a coatable paste, a dilute emulsion, a wettable powder, a soluble powder, a dispersible powder, a wettable powder, a dust, granules or an encapsulation in polymer substances, comprising in addition to the compound of formula (I) and of formula (II), and where appropriate at least one further insecticidally active compound, at least one fungicidally active compound, the type of formulation being chosen in accordance with the intended objectives and prevailing circumstances. Preferred formulation of the composition are the microcapsules. The compound (I) and the compound (II) can be microencapsuleted separately or together. The microcapsules have the property to be a slow-release formulation. The preferred package of the microcapsules is the twin-pac.

The active ingredients are used in those compositions in pure form, a solid active ingredient, for example, in a specific particle size, or preferably together with - at least - one of the adjuvants customary in formulation technology, such as extenders, for example solvents or solid carriers, or surface-active compounds (surfactants).
Suitable solvents are, for example: optionally partially hydrogenated aromatic hydrocarbons, preferably the fractions of alkylbenzenes containing 8 to 12 carbon atoms, such as xylene mixtures, alkylated naphthalenes or tetrahydronaphthalene, aliphatic or cycloaliphatic hydrocarbons, such as paraffins or cyclohexane, alcohols, such as ethanol, propanol or butanol, glycols and their ethers and esters, such as propylene glycol, dipropylene glycol ether, ethylene glycol or ethylene glycol monomethyl or monoethyl ether, ketones, such as cyclohexanone, isophorone or diacetone alcohol, strongly polar solvents, such as N-methylpyrrolid-2-one, dimethyl sulfoxide or N,N-dimethylformamide, water, vegetable oils or epoxidised vegetable oils, such as rape oil, castor oil, coconut oil or soybean oil or epoxidised rape oil, castor oil, coconut oil or soybean oil, and silicone oils.
The solid carriers used, e.g. for dusts and dispersible powders, are normally natural mineral fillers such as calcite, talcum, kaolin, montmorillonite or attapulgite. In order to improve the physical properties it is also possible to add highly dispersed silicic acids or highly dispersed absorbent polymers. Suitable granulated adsorptive carriers are porous types, such as pumice, broken brick, sepiolite or bentonite; and suitable nonsorbent carriers are calcite or sand. In addition, a great number of granulated materials of inorganic or organic nature can be used, especially dolomite or pulverised plant residues.

Depending on the nature of the compound to be formulated, suitable surface-active compounds are non-ionic, cationic and/or anionic surfactants or mixtures of surfactants having good emulsifying, dispersing and wetting properties. The surfactants listed below are to be regarded merely as examples; many more surfactants customarily employed in formulation technology and suitable for use according to the invention are described in the relevant literature.

Non-ionic surfactants are preferably polyglycol ether derivatives of aliphatic or cycloaliphatic alcohols, saturated or unsaturated fatty acids and alkylphenols, said derivatives containing 3 to 30 glycol ether groups and 8 to 20 carbon atoms in the (aliphatic) hydrocarbon moiety and 6 to 18 carbon atoms in the alkyl moiety of the alkylphenols. Further suitable non-ionic surfactants are water-soluble adducts of polyethylene oxide with polypropylene glycol, ethylenediaminopolypropylene glycol and alkylpolypropylene glycol containing 1 to 10 carbon atoms in the alkyl chain, which adducts contain 20 to 250 ethylene glycol ether groups and 10 to 100 propylene glycol ether groups. These compounds usually contain 1 to 5 ethylene glycol units per propylene glycol unit. Representative examples of non-ionic surfactants are nonylphenol polyethoxyethanols, castor oil polyglycol ethers, polypropylene/polyethylene oxide adducts, tributylphenoxypolyethoxyethanol, polyethylene glycol and octylphenoxypolyethoxyethanol. Fatty acid esters of polyoxyethylene sorbitan, e.g. polyoxyethylene sorbitan trioleate, are also suitable non-ionic surfactants.

Cationic surfactants are preferably quaternary ammonium salts which contain, as substituent, at least one C₈-C₂₂alkyl radical and, as further substituents, unsubstituted or halogenated lower alkyl, benzyl or hydroxy-lower alkyl radicals. The salts are preferably in the form of halides, methyl sulfates or ethyl sulfates. Examples are stearyltrimethylammonium chloride and benzyldi(2-chloroethyl)ethylammonium bromide.

Both water-soluble soaps and water-soluble synthetic surface-active compounds are suitable anionic surfactants. Suitable soaps are the alkali metal salts, alkaline earth metal salts or unsubstituted or substituted ammonium salts of higher fatty acids (C₁₀-C₂₂), e.g. the sodium or potassium salts of oleic or stearic acid, or of natural fatty acid mixtures which can be obtained e.g. from coconut oil or tall oil; mention may also be made of fatty acid methyltaurine salts. More frequently, however, so-called synthetic surfactants are used, especially fatty sulfonates, fatty sulfates, sulfonated benzimidazole derivatives or alkylarylsulfonates. The fatty sulfonates or sulfates are usually in the form of alkali metal salts, alkaline earth metal salts or unsubstituted or substituted ammonium salts and generally contain a C₈-C₂₂alkyl radical, which also includes the alkyl moiety of acyl radicals; there may be mentioned by way of example the sodium or calcium salt of lignosulfonic acid, of dodecyl sulfate or of a mixture of fatty alcohol sulfates obtained from natural fatty acids. These compounds also comprise the salts of sulfated and sulfonated fatty alcohol/ethylene oxide adducts. The sulfonated benzimidazole derivatives preferably contain 2 sulfonic acid groups and one fatty acid radical containing approximately 8 to 22 carbon atoms. Examples of alkylarylsulfonates are the sodium, calcium or triethanolammonium salts of dodecylbenzenesulfonic acid, dibutylnaphthalenesulfonic acid or of a condensate of naphthalenesulfonic acid and formaldehyde. Also suitable are corresponding phosphates, e.g. salts of the phosphoric acid ester of an adduct of p-nonylphenol with 4 to 14 mol of ethylene oxide, or phospholipids.

The compositions usually comprise 0.1 to 99%, preferably 0.1 to 95%, of active ingredient mixture, and 1 to 99.9%, preferably 5 to 99.9%, of - at least - one solid or liquid adjuvant, it generally being possible for 0 to 25%, preferably 0.1 to 20%, of the composition to be surfactants (in each case percentages are by weight). Whereas commercial products will preferably be formulated as concentrates, the end user will normally employ dilute formulations which have considerably lower active ingredient concentrations. Preferred compositions are especially the following (throughout, percentages are by weight):

The active ingredient combinations according to the invention preferably comprise a compound of formula (I) and a compound selected from the compounds of formulae (II) in a mixing ratio of from 1 (compound of formula (I)): 100 (compound of formula (II)) to 100:1, especially from 1:20 to 20:1, more especially from 1:10 to 10:1:1, especially from 1:5 to 5:1, very especially from 1:2, to 2:1.

Preference is given furthermore to an active ingredient combination comprising
1. a compound of formula (I) and a compound of formula IIA;
2. a compound of formula (I) and a compound of formula IIB;
3. a compound of formula (I) and a compound of formula IIC;

The above-mentioned mixing ratios relate on the one hand to parts by weight of the individual components, but on the other hand also to the mixing ratios in moles. Thus, for example, the ratio of 4 : 1 denotes four parts by weight of a compound of formula (I) to one part by weight of an insecticidal compound to one part by weight of a further fungicidally or insecticidally active compound, but also four moles of a compound of formula (I) to one mole of an insecticidal compound to one mole of a further fungicidally or insecticidally active compound. Finally, the figures relate also to mixtures in the ratio of the LD₅₀ values of the individual pests to be controlled.

| Emulsifiable concentrates: | |
|---|---|
| insecticidally active compound (II) | 1 to 90%, preferably 5 to 20% |
| compound (I) | 1 to 90%, preferably 5 to 20% |
| surfactant: | 1 to 30%, preferably 15 to 20% |
| solvent: | to 98%, preferably 70 to 85% |

| Dusts: | |
|---|---|
| insecticidally active compound (II) | 0.1 to 10%, preferably 0.1 to 1% |
| compound (I) | 0.1 to 10%, preferably 0.1 to 1% |
| solid carrier: | 99.9 to 90%, preferably 99.9 to 99% |

| Suspension concentrates: | |
|---|---|
| insecticidally active compound (II) | 5 to 75%, preferably 10 to 50% |
| compound (I) | 5 to 75%, preferably 10 to 50% |
| water: | 94 to 24%, preferably 88 to 30% |
| surfactant: | 1 to 40%, preferably 2 to 30% |

| Wettable powders: | |
|---|---|
| insecticidally active compound (II) | 0.5 to 90%, preferably 1 to 80% |
| compound (I) | 0.5 to 90%, preferably 1 to 80% |
| surfactant: | 0.5 to 20%, preferably 1 to 15% |
| solid carrier: | 5 to 99%, preferably 15 to 98% |

| Granules: | |
|---|---|
| insecticidally active compound (II) | 0.5 to 30%, preferably 3 to 15% |
| solid carrier: | 99.5 to 70%, preferably 97 to 85% |
| compound (I) | 0.5 to 30%, preferably 3 to 15% |

The compositions according to the invention may also comprise further solid or liquid adjuvants, such as stabilisers, for example vegetable oils or epoxidised vegetable oils (e.g. epoxidised coconut oil, rape oil or soybean oil), antifoams, for example silicone oil, preservatives, viscosity regulators, binders and/or tackifiers, as well as fertilisers or other active ingredients for obtaining special effects, for example bactericides, nematicides, molluscicides or selective herbicides.

The compositions according to the invention are prepared in known manner, in the absence of adjuvants, for example by grinding and/or sieving a solid active ingredient or mixture of active ingredients, for example to a specific particle size, and in the presence of at least one adjuvant, for example by intimately mixing and/or grinding the active ingredient or mixture of active ingredients with the adjuvant(s). The invention relates also to those processes for the preparation of the compositions according to the invention and to the use of the compounds of formula (I) and of formula (II) in the preparation of those compositions.

The invention relates also to the methods of application of the compositions, i.e. the methods of controlling pests and microorganisms of the mentioned type, such as spraying, atomising, dusting, coating, dressing, scattering or pouring, which are selected in accordance with the intended objectives and prevailing circumstances, and to the use of the compositions for controlling pests of the mentioned type. Typical rates of concentration are from 0.1 to 1000 ppm, preferably from 0.1 to 500 ppm, of active ingredient. The rates of application per hectare are generally from 1 to 2000 g of active ingredient per hectare, especially from 10 to 1000 g/ha, preferably from 20 to 600 g/ha.

A preferred method of application in the area of plant protection is application to the foliage of the plants (foliar application), the number of applications and the rate of application depending on the risk of infestation by the pest in question. However, the active ingredient can also penetrate the plants through the roots (systemic action) if the locus of the plants is impregnated with a liquid formulation or if the active ingredient is incorporated in solid form into the locus of the plants, for example into the soil, e.g. in granular form (soil application). In paddy rice crops, such granules may be applied in metered amounts to the flooded rice field. The compositions according to the invention are also suitable for protecting plant propagation material, e.g. seed material, such as fruit, tubers or grains, or plant cuttings, from fungal infections and animal pests. The propagation material can be treated with the composition before planting: seed, for example, can be dressed before being sown. The compounds of the invention can also be applied to grains (coating), either by impregnating the grains with a liquid formulation or by coating them with a solid formulation. The composition can also be applied to the planting site when the propagation material is being planted, for example to the seed furrow during sowing. The invention relates also to that method of treating plant propagation material and to the plant propagation material thus treated.

| Example F1: Emulsifiable concentrates | a) | b) | c) |
|---|---|---|---|
| pesiticidally active compounds | 25% | 40% | 50% |
| calcium dodecylbenzenesulfonate | 5% | 8% | 6% |
| castor oil polyethylene glycol ether (36 mol EO) | 5% | - | - |
| tributylphenol polyethylene glycol ether (30 mol EO) | - | 12% | 4% |
| cyclohexanone | - | 15% | 20% |
| xylene mixture | 65% | 25% | 20% |

Such concentrates can be diluted with water to give emulsions of any desired concentration.

| Example F2: Solutions | a) | b) | c) | d) |
|---|---|---|---|---|
| pesiticidally active compounds | 80% | 10% | 5% | 95% |
| ethylene glycol monomethyl ether | 20% | - | - | - |
| polyethylene glycol (mol. wt. 400) | - | 70% | - | - |
| N-methylpyrrolid-2-one | - | 20% | - | - |
| epoxidised coconut oil | - | - | 1 % | 5% |
| petroleum fraction (boiling range: 160-190°C) | - | - | 94% | - |

The solutions are suitable for use in the form of microdrops.

| Example F3: Granules | a) | b) | c) | d) |
|---|---|---|---|---|
| pesiticidally active compounds | 5% | 10% | 8% | 21% |
| kaolin | 94% | - | 79% | 54% |
| highly dispersed silicic acid | 1% | - | 13% | 7% |
| attapulgite | - | 90% | - | 18% |

The active ingredients are dissolved in dichloromethane and the solution is sprayed onto the carrier and the solvent is then evaporated off in vacuum.

| Example F4: Dusts | a) | b) |
|---|---|---|
| pesiticidally active compounds | 2% | 5% |
| highly dispersed silicic acid | 1 % | 5% |
| talcum | 97% | - |
| kaolin | - | 90% |

The active ingredient is homogeneously mixed with the carriers, giving dusts that are ready for use.

| Example F5: Wettable powders | a) | b) | c) |
|---|---|---|---|
| pesiticidally active compounds | 25% | 50% | 75% |
| sodium lignosulfonate | 5% | 5% | - |
| sodium laurylsulfate | 3% | - | 5% |
| sodium diisobutylnaphthalenesulfonate | - | 6% | 10% |
| octylphenol polyethylene glycol ether (7-8 mol EO) | - | 2% | - |
| highly dispersed silicic acid | 5% | 10% | 10% |
| kaolin | 62% | 27% | - |

The active ingredient is mixed with the adjuvants and the mixture is thoroughly ground in a suitable mill, affording wettable powders which can be diluted with water to give suspensions of the desired concentration.

| Example F6: Emulsifiable concentrate | |
|---|---|
| pesiticidally active compounds | 10% |
| octylphenol polyethylene glycol ether (4-5 mol EO) | 3% |
| calcium dodecylbenzenesulfonate | 3% |
| castor oil polyethylene glycol ether (36 mol EO) | 4% |
| cyclohexanone | 30% |
| xylene mixture | 50% |

This concentrate can be diluted with water to give emulsions of any desired concentration.

| Example F7: Dusts | a) | b) |
|---|---|---|
| pesiticidally active compounds | 5% | 8% |
| talcum | 95% | - |
| kaolin | - | 92% |

Ready-for-use dusts are obtained by mixing the active ingredient with the carrier and grinding the mixture in a suitable mill.

| Example F8: Extruder granules | |
|---|---|
| pesiticidally active compounds | 10% |
| sodium lignosulfonate | 2% |
| carboxymethylcellulose | 1 % |
| kaolin | 87% |

The active ingredient is mixed with the adjuvants and the mixture is ground and moistened with water. The mixture is extruded and granulated and the granules are dried in a stream of air.

| Example F9: Coated granules | |
|---|---|
| pesiticidally active compounds | 3% |
| polyethylene glycol (mol. wt. 200) | 3% |
| kaolin | 94% |

The finely ground active ingredient is uniformly applied, in a mixer, to the kaolin moistened with polyethylene glycol. Non-dusty coated granules are obtained in this manner.

| Example F10: Suspension concentrate | |
|---|---|
| pesiticidally active compounds | 40% |
| ethylene glycol | 10% |
| nonylphenol polyethylene glycol ether (15 mol EO) | 6% |
| sodium lignosulfonate | 10% |
| carboxymethylcellulose | 1% |
| aqueous formaldehyde solution (37%) | 0.2% |
| aqueous silicone oil emulsion (75%) | 0.8% |
| water | 32% |

The finely ground active ingredient is homogeneously mixed with the adjuvants, giving a suspension concentrate from which suspensions of any desired concentration can be obtained by dilution with water.

### Biological Examples (throughout, percentages are by weight, unless otherwise indicated) Example B2: Action against Nilaparvata lugens

Rice plants are sprayed with an aqueous emulsion comprising 400 ppm of the test compound mixture. After the spray coating has dried, the rice plants are populated with cicada larvae in the 2nd and 3rd stages. Evaluation is made 21 days later. The percentage reduction in the population (% activity) is determined by comparing the number of surviving cicadas on the treated plants with that on untreated plants.
The compositions according to the invention exhibit good activity in this test.

### Example B3: Action against Diabrotica balteata larvae

Maize seedlings are sprayed with an aqueous emulsion comprising 400 ppm of the test compound mixture. After the spray coating has dried, the maize seedlings are populated with 10 Diabrotica balteata larvae in the second stage and placed in a plastics container. Evaluation is made 6 days later. The percentage reduction in the population (% activity) is determined by comparing the number of dead larvae on the treated plants with that on untreated plants.
The compositions according to the invention exhibit good activity in this test.

### Example B4: Action against Anthonomus grandis adults

Young cotton plants are sprayed with an aqueous emulsion comprising 400 ppm of the test compound mixture. After the spray coating has dried, the cotton plants are populated with 10 Anthonomus grandis adults and placed in a plastics container. Evaluation is made 3 days later. The percentage reduction in the population or the percentage reduction in feeding damage (% activity) is determined by comparing the number of dead beetles and the feeding damage on the treated plants with that on untreated plants.
The compositions according to the invention exhibit good activity in this test.

### Example B5: Action against Heliothis virescens caterpillars

Young soybean plants are sprayed with an aqueous emulsion comprising 400 ppm of the test compound mixture. After the spray coating has dried, the soybean plants are populated with 10 Heliothis virescens caterpillars in the first stage and placed in a plastics container. Evaluation is made 6 days later. The percentage reduction in the population or the percentage reduction in feeding damage (% activity) is determined by comparing the number of dead caterpillars and the feeding damage on the treated plants with that on untreated plants.
The compositions according to the invention exhibit good activity in this test.

### Example B6: Action against Spodoptera littoralis caterpillars

Young soybean plants are sprayed with an aqueous emulsion comprising 400 ppm of the test compound mixture. After the spray coating has dried, the soybean plants are populated with 10 Spodoptera littoralis caterpillars in the third stage and placed in a plastics container. Evaluation is made 3 days later. The percentage reduction in the population or the percentage reduction in feeding damage (% activity) is determined by comparing the number of dead caterpillars and the feeding damage on the treated plants with that on untreated plants.
The compositions according to the invention exhibit good activity in this test.

### Example B7: Action against Crocidolomia binotalis caterpillars

Young cabbage plants are sprayed with an aqueous emulsion comprising 400 ppm of the test compound mixture. After the spray coating has dried, the cabbage plants are populated with 10 Crocidolomia binotalis caterpillars in the third stage and placed in a plastics container. Evaluation is made 3 days later. The percentage reduction in the population or the percentage reduction in feeding damage (% activity) is determined by comparing the number of dead caterpillars and the feeding damage on the treated plants with that on untreated plants.
The compositions according to the invention exhibit good activity in this test.

### Example B8: Systemic action against Nilaparvata lugens

Pots containing rice plants are placed in an aqueous emulsion solution containing 400 ppm of the test compound mixture. The rice plants are then populated with larvae in the 2nd and 3rd stages. Evaluation is made 6 days later. The percentage reduction in the population (% activity) is determined by comparing the number of cicadas on the treated plants with that on untreated plants.
The compositions according to the invention exhibit good activity in this test.

### Example B9: Ovicidal action against Tetranychus urticae

Young bean plants are populated with Tetranychus urticae females which are removed 24 hours later. The plants populated with eggs are sprayed with an aqueous emulsion comprising 400 ppm of the test compound mixture. The plants are then incubated for 6 days at 25°C and then evaluated. The percentage reduction in the population (% activity) is determined by comparing the number of dead eggs, larvae and adults on the treated plants with that on untreated plants.
The compositions according to the invention exhibit good activity in this test.

### Example B14: Action against Plutella xylostella caterpillars

Young cabbage plants are sprayed with an aqueous emulsion comprising 400 ppm of the test compound mixture. After the spray coating has dried, the cabbage plants are populated with 10 Plutella xylostella caterpillars in the third stage and placed in a plastics container. Evaluation is made 3 days later. The percentage reduction in the population or the percentage reduction in feeding damage (% activity) is determined by comparing the number of dead caterpillars and the feeding damage on the treated plants with that on untreated plants.
The compositions according to the invention exhibit good activity in this test.

### Example B15: Action against Phytophthora infestans on tomatoes

### a) Curative action

After a cultivation period of 3 weeks, tomato plants of the "Red Gnome" variety are sprayed with a zoospore suspension of the fungus and incubated in a cabinet at 18 to 20°C and 100 % humidity. Humidification is stopped after 24 hours. When the plants have dried, they are sprayed with a mixture comprising the test compound mixture formulated as a wettable powder in a concentration of 200 ppm. After the spray coating has dried, the plants are again placed in the humidity cabinet for 4 days. The activity of the test compounds is evaluated on the basis of the number and size of the typical leaf specks that have occurred after that time.

### b) Preventive-systemic action

The test compound mixture formulated as a wettable powder is applied in a concentration of 60 ppm (based on the volume of the soil) to the soil surface of three-week-old tomato plants of the "Red Gnome" variety planted in pots. After a 3-day waiting period, the undersides of the leaves of the plants are sprayed with a zoospore suspension of Phytophthora infestans. The plants are then kept in a spray cabinet for 5 days at 18 to 20°C and 100 % humidity. After that time, typical leaf specks form, the number and size of which are used to evaluate the activity of the test compounds.
Whereas untreated but infected control plants exhibit 100 % infestation, good activity is achieved with the compositions according to the invention.

### Example B16: Action against Plasmopara viticola (Bert et Curt.) (Berl. et DeToni) on vines

### a) Residual-preventive action

Vine seedlings of the "Chasselas" variety are grown in a greenhouse. 3 plants are sprayed at the 10-leaf stage with a mixture (200 ppm active ingredient mixture). After the spray coating has dried, the undersides of the leaves of the plants are infected uniformly with a spore suspension of the fungus. The plants are then kept in a humidity chamber for 8 days. After that time, the control plants exhibit marked symptoms of disease. The activity of the test compounds is evaluated on the basis of the number and size of the sites of infection on the treated plants.

### b) Curative action

Vine seedlings of the "Chasselas" variety are grown in a greenhouse and the undersides of the leaves are infected at the 10-leaf stage with a spore suspension of Plasmopara viticola.

After 24 hours in a humidity cabinet, the plants are sprayed with a mixture of the test compounds (200 ppm, 60 ppm, 20 ppm active ingredient mixture). Then the plants are kept in the humidity cabinet for a further 7 days. After that time, the control plants exhibit symptoms of disease. The activity of the test compounds is evaluated on the basis of the number and size of the sites of infection on the treated plants.
The compositions according to the invention exhibit good activity in this test.

### Example B17: Action against Pythium debaryanum on sugar beet (Beta vulgaris)

### a) Action following soil application

The fungus is cultivated on sterile oat grains and added to a soil/sand mixture. The soil so infected is introduced into plant pots and sown with sugar beet seeds. Immediately after sowing, the test compounds, formulated as wettable powders, are poured in the form of an aqueous suspension over the soil (20 ppm active ingredient mixture, based on the volume of the soil). The pots are then placed in a greenhouse at 20-24°C for 2-3 weeks. The soil is kept uniformly moist by light spraying with water. The test is evaluated by determining the emergence of the sugar beet plants and the proportion of healthy and diseased plants.

### b) Action following application by dressing

The fungus is cultivated on sterile oat grains and added to a soil/sand mixture. The soil so infected is introduced into plant pots and sown with sugar beet seeds which have been dressed with the test compounds formulated as dressing powders (1000 ppm active ingredient mixture, based on the weight of the seeds). The pots containing the seeds are then placed in a greenhouse at 20-24°C for 2-3 weeks. The soil is kept uniformly moist by light spraying with water.
The test is evaluated by determining the emergence of the sugar beet plants and the proportion of healthy and diseased plants.
The compositions according to the invention exhibit good activity in this test.

### Example B18: Residual-protective action against Cercospora arachidicola on groundnut plants

Groundnut plants 10-15 cm in height are sprayed to drip point with an aqueous spray mixture (0.02% active ingredient mixture) and infected 48 hours later with a conidia suspension of the fungus. The plants are incubated for 72 hours at 21 °C and high humidity and then placed in a greenhouse until the typical leaf specks appear. Evaluation of the activity of the active ingredient is made 12 days after infection and is based on the number and size of the leaf specks.
The compositions according to the invention exhibit good activity in this test.

### Example B19: Action against Puccinia graminis on wheat

### a) Residual protective action:

6 days after sowing, wheat plants are sprayed to drip point with an aqueous spray mixture (0.02 % active ingredient mixture) and infected 24 hours later with a uredospore suspension of the fungus. The plants are then incubated for 48 hours (conditions: 95-100 % relative humidity and 20°C) and then placed in a greenhouse at 22°C. Evaluation of rust pustule development is made 12 days after infection.

### b) Systemic action:

Wheat plants are watered 5 days after sowing with an aqueous spray mixture (0.006 % active ingredient mixture, based on the volume of the soil). Care is taken that the spray mixture does not come into contact with the parts of the plants above the soil. 48 hours later the plants are infected with a uredospore suspension of the fungus. The plants are then incubated for 48 hours (conditions: 95-100 % relative humidity and 20°C) and then placed in a greenhouse at 22°C. Evaluation of rust pustule development is made 12 days after infection.
The compositions according to the invention exhibit good activity in this test.

### Example B20: Action against Pyricularia oryzae on rice

### a) Residual-protective action:

After a cultivation period of 2 weeks, rice plants are sprayed to drip point with an aqueous spray mixture (0.02 % active ingredient mixture) and infected 48 hours later with a conidia suspension of the fungus. Evaluation of fungus infestation is made 5 days after infection, during which time a relative humidity of 95-100 % and a temperature of 22°C are maintained.

### b) Systemic action:

2-week-old rice plants are watered with an aqueous spray mixture (0.006% active ingredient mixture, based on the volume of the soil). Care is taken that the spray mixture does not come into contact with the parts of the plants that are above the soil. The pots are then filled with water so that the lowermost parts of the stems of the rice plants stand in water. After 96 hours, the plants are infected with a conidia suspension of the fungus and then kept for 5 days at 95-100% relative humidity and a temperature of 24°C.
The compositions according to the invention exhibit good activity in this test.

### Example B21: Residual protective action against Venturia inaegualis on apples

Apple cuttings with 10-20 cm long fresh shoots are sprayed to drip point with a spray mixture (0.02 % active ingredient mixture) and infected 24 hours later with a conidia suspension of the fungus. The plants are then incubated for 5 days at 90-100 % relative humidity and placed in a greenhouse for a further 10 days at 20-24°C. Scab infestation is evaluated 15 days after infection.
The compositions according to the invention exhibit good activity in this test.

### Example B22: Action against Erysiphe graminis on barley

### a) Residual-protective action:

Barley plants about 8 cm in height are sprayed to drip point with an aqueous spray mixture (0.02 % active ingredient mixture) and dusted 3 to 4 hours later with conidia of the fungus. The infected plants are placed in a greenhouse at 22°C. The fungus infestation is evaluated 10 days after infection.

### b) Systemic action:

An aqueous spray mixture (0.002% active ingredient mixture, based on the volume of the soil) is used to water barley plants about 8 cm in height. Care is taken that the spray mixture does not come into contact with the parts of the plants above the soil. The plants are dusted 48 hours later with conidia of the fungus. The infected plants are then placed in a greenhouse at 22°C. The fungus infestation is evaluated 10 days after infection.
The compositions according to the invention exhibit good activity in this test.

### Example B23: Action against Podosphaera leucotricha on apple shoots

### Residual-protective action

Apple cuttings with about 15 cm long fresh shoots are sprayed with a spray mixture (0.06 % active ingredient mixture). After 24 hours, the treated plants are infected with a conidia suspension of the fungus and are placed in a climatic chamber at 70 % relative humidity and 20°C. Fungus infestation is evaluated 12 days after infection.
The compositions according to the invention exhibit good activity in this test.

### Example B24: Action against Botrytis cinerea on apple fruits

### Residual-protective action

Artificially damaged apples are treated by dropping a spray mixture (0.02 % active ingredient mixture) onto the damaged sites. The treated fruits are then inoculated with a spore suspension of the fungus and are incubated for one week at high humidity and about 20°C. The fungicidal activity of the test compound is derived from the number of rotting damaged sites.
The compositions according to the invention exhibit good activity in this test.

### Example B25: Action against Helminthosporium gramineum

Wheat grains are contaminated with a spore suspension of the fungus and are left to dry. The contaminated grains are dressed with a suspension of the test compound (600 ppm active ingredient mixture, based on the weight of the seeds). Two days later, the grains are placed on suitable agar dishes and, after a further four days, the development of the fungus colonies around the grains is assessed. The evaluation of the test compound is based on the number and size of the fungus colonies.
The compositions according to the invention exhibit good activity in this test.

### Example B26: Action against Colletotrichum lagenarium on cucumbers

After a cultivation period of 2 weeks, cucumber plants are sprayed with a spray mixture (concentration of active ingredient mixture: 0.002%). Two days later, the plants are infected with a spore suspension (1.5×10⁵ spores/ml) of the fungus and are incubated for 36 hours at 23°C and high humidity. Incubation is then continued at normal humidity and about 22-23°C. The fungus infestation that has occurred is evaluated 8 days after infection. Fungus infestation is 100% on untreated and infected control plants.
The compositions according to the invention exhibit good activity in this test.

### Example B27: Action against Fusarium nivale on rye

Rye of the Tetrahell variety which is naturally infected with Fusarium nivale is dressed in a roller mixer with the test compound mixture, the following concentrations being used: 20 or 6 ppm active ingredient mixture (based on the weight of the seed).
The infected and treated rye is sown in October in the open with a seeder in plots 3 metres long and in 6 rows. Three replicates are carried out with each concentration.

Until evaluation of the infestation is made, the test crop is cultivated under normal field conditions (preferably in a region with unbroken snow cover during the winter months). In order to evaluate the phytotoxicity, the emergence is assessed in the autumn and the crop density/number of plants per unit area is assessed in the spring.
To determine the activity of the test compounds, the percentage of plants attacked by Fusarium is assessed in the spring directly after the snow has melted. The number of infested plants is less than 5% in the present case. The plants that have emerged have a healthy appearance.
The compositions according to the invention exhibit good activity in this test.

### Example B28: Action against Septoria nodorum on wheat

Wheat plants are sprayed at the 3-leaf stage with a spray mixture (60 ppm active ingredient mixture) prepared from a wettable powder formulation of the test compounds (2.8:1). 24 hours later, the treated plants are infected with a conidia suspension of the fungus. The plants are then incubated for 2 days at 90-100% relative humidity and are placed in a greenhouse for a further 10 days at 20-24°C. Fungus infestation is evaluated 13 days after infection. Less than 1% of the wheat plants are infested.
The compositions according to the invention exhibit good activity in this test.

### Example B29: Vigor of Rice (Oryza sativa L. cv. Nihonbare) and Eggplant (Solanum melongena L. cv. Marfa)

Plants are grown in a commercially available pathogen-free soil mixture. 2 weeks (eggplants 3 weeks) after planting seedlings are transplanted into 600 ml pots and drench treated with 10 mg Thiamethoxam in 20 ml water per pot. They were fertilised once or twice a week. Up to 10 weeks after treatment, fresh- and dry-weight of shoots and roots and numbers of leaves are determined. Protein content is measured by the method of Bradford (1976, Anal. Biochem., 72, 248-254) with BSA (bovine serum albumin) as standard: Homogenisation of leaf material in liquid N₂ in a mortar. Extraction in phosphate buffer (pH 7.5, 0.1 M, 2/1 vol/weight). After centrifugation supernatant is separated from pellet and stored at -20°C until protein determination. For comparison of treated and check, mg protein/g fresh weight is calculated.

### Example B30: Yield

Potato tubers are treated with the composition of the invention, at a rate of 500 g component (II) per 100 kg seed and are planted following procedures which correspond to conditions found in practice. The crop is harvested from the field at maturity. Untreated tubers from the same origin are used for comparison purposes. Crop yield is evaluated and found to be significantly higher in the case of treated potato tubers than with untreated tubers.

In summary, it is seen that this invention provides a new method for improving the plant growth. Variations may be made in proportions, procedures and materials without departing from the scope of the invention as defined by the following claims.

## Claims

1. A method of combating microorganisms and insects or representatives of the order Acarina on crop plants, which comprises applying to the crop plants or the locus thereof being infested with said microorganisms and insects an effective amount of at least one compound of formula (I) 1,2,5,6-tetrahydro-4H-pyrrolo[3,2,1-ij]quinolin-4-one (pyroquilon) 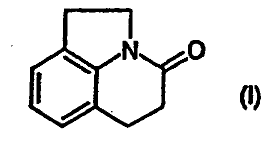 and at least one compound selected from the group consisting of:
IIA) Thiamethoxam, 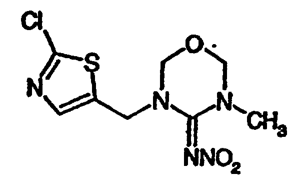
IIB) Clothianidin, 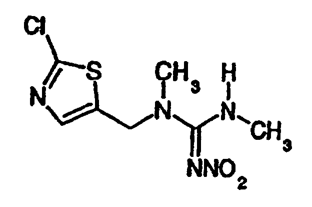
IIC) MTI-446,

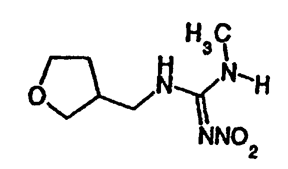

2. A method according to claim 1 for controlling phytopathogenic fungi and insects or representatives of the order Acarina.

3. A method according to claim 1 for treating plant propagation material, preferably seeds.

4. A method according to claim 1 for treating seedling boxes.

5. A method according to claim 1 for treating cereals and rice.

6. A method according to claim 1, which comprises applying a composition comprising an effective combination of component (I) and component (II) as defined in claim 1, wherein the components are present in amounts which enhance the activity against phytopathogene diseases and insect or representative of the order Acarina attack.

7. A method according to claim 6 , wherein component (I) and component (II) are formulated into a slow-release formulation in the form of microcapsules..

8. A method according to claim 7, wherein component (I) and component (II) are independently formulated in the form of microcapsules.

9. A method according to claim 8 , wherein the microcapsules are packed in a twin-pack.

10. A method according to claim 1 or claim 6, wherein a site that has been attacked by fungi and insects or is in danger of being attacked is treated with component (I) and component (II) simultaneously or in any desired order on the same day.

11. A composition comprising an effective combination of component (I) and component (II) as defined in claim 1, wherein the components are present in amounts which enhance the activity against phytopathogene diseases and insects or representative of the order Acarina attack.

12. A composition according to claim 11 wherein the weight ratio of component (I) to component (II) is between 100: 1 and 1:100.

13. A composition according to claim 12 for controlling phytopathogenic fungi and feeding insects.

14. The use of a composition as claimed in any one of claims I 1 to 13, in a method of combating microorganisms and insects or representatives of the order of Acarina on crop plants as claimed in claim 1.

## Patentansprüche

1. Verfahren zum Bekämpfen von Mikroorganismen und Insekten oder Vertretern der Gattung Acarina auf Kulturpflanzen, das Applizieren auf die Kulturpflanzen oder deren Standort, der/die mit den Mikroorganismen und Insekten befallen ist/sind, einer wirksamen Menge von mindestens einer Verbindung der Formel (I) 1,2,5,6-Tetrahydro-4H-pyrrolo-[3,2,1-ij]chinolin-4-on (Pyroquilon) 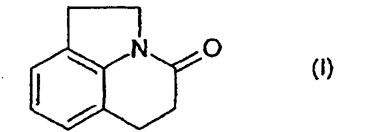 und mindestens einer Verbindung, ausgewählt aus der Gruppe, bestehend aus:
IIA) Thiamethoxam, 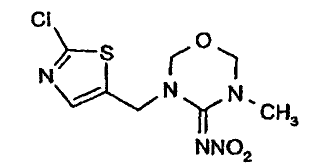
IIB) Clothianidin, 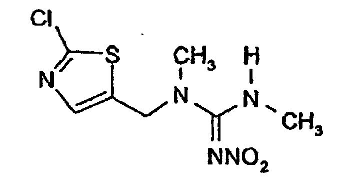
IIC) MTI-446, 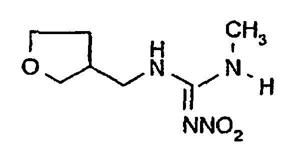 umfasst.

2. Verfahren nach Anspruch 1 zum Bekämpfen von phytopathogenen Pilzen und Insekten oder Vertretern der Gattung Acarina.

3. Verfahren nach Anspruch 1 zum Behandeln von Pflanzenvermehrungsgut, vorzugsweise Saatgut.

4. Verfahren nach Anspruch 1 zum Behandeln von Saatkisten.

5. Verfahren nach Anspruch 1 zum Behandeln von Getreide und Reis.

6. Verfahren nach Anspruch 1, das Applizieren einer Zusammensetzung, umfassend eine wirksame Kombination von Komponente (I) und Komponente (II), wie in Anspruch 1 definiert, umfasst, wobei die Komponenten in Mengen vorliegen, die die Wirksamkeit gegen phytopathogene Krankheiten und gegen den Befall durch Insekten oder Vertreter der Gattung Acarina erhöhen.

7. Verfahren nach Anspruch 6, wobei Komponente (I) und Komponente (II) in einer Formulierung zur langsamen Freisetzung in Form von Mikrokapseln formuliert werden.

8. Verfahren nach Anspruch 7, wobei Komponente (I) und Komponente (II) unabhängig in Form von Mikrokapseln formuliert werden.

9. Verfahren nach Anspruch 8, wobei die Mikrokapseln in einem Doppelpack verpackt werden.

10. Verfahren nach Anspruch 1 oder Anspruch 6, wobei eine Stelle, die durch Pilze und Insekten befallen wurde, oder in Gefahr ist, befallen zu werden, mit Komponente (I) und Komponente (II) gleichzeitig oder in beliebiger gewünschter Reihenfolge am gleichen Tag behandelt wird.

11. Zusammensetzung, umfassend eine wirksame Kombination von Komponente (I) und Komponente (II), wie in Anspruch 1 definiert, worin die Komponenten in Mengen vorliegen, die die Wirksamkeit gegen phytopathogene Krankheiten und gegen den Befall durch Insekten oder Vertreter der Gattung Acarina erhöhen.

12. Zusammensetzung nach Anspruch 11, worin das Gewichtsverhältnis von Komponente (I) zu Komponente (II) zwischen 100:1 und 1:100 liegt.

13. Zusammensetzung nach Anspruch 12 zum Bekämpfen von phytopathogenen Pilzen und Fraßinsekten.

14. Verwendung einer Zusammensetzung nach einem der Ansprüche 11 bis 13 bei einem Verfahren nach Anspruch 1 zum Bekämpfen von Mikroorganismen und Insekten oder Vertretern der Gattung Acarina auf Kulturpflanzen.

## Revendications

1. Procédé de lutte contre des micro-organismes et des insectes ou des représentants de l'ordre des Acariens sur des plantes cultivées, comprenant l'application sur les plantes cultivées ou le lieu où elles se trouvent, infestés par lesdits microorganismes et insectes, d'une quantité efficace d'au moins un composé de formule (I) 1,2,5,6-tétrahydro-4H-pyrrolo[3,2,1-ij]quinolin-4-one (pyroquilone) 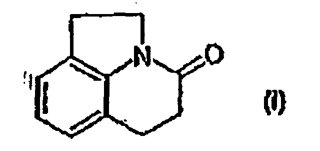 et d'au moins un composé choisi dans le groupe constitué par :
IIA) le thaméthoxam, 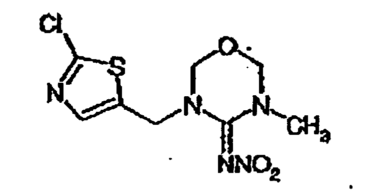
IIB) la clothianidine, 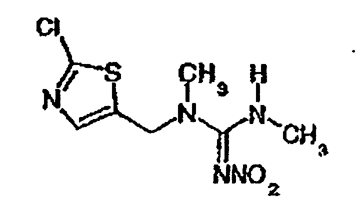
IIC) MTI-446

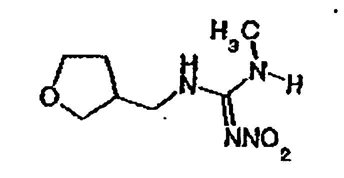

2. Procédé selon la revendication 1, pour combattre des champignons phytopathogènes et des insectes ou des représentants de l'ordre des acariens.

3. Procédé selon la revendication 1, pour le traitement de matériel de propagation végétale, de préférence des semences.

4. Procédé selon la revendication 1, pour le traitement des semis.

5. Procédé selon la revendication 1, pour le traitement de céréales et du riz.

6. Procédé selon la revendication 1, comprenant l'application d'une composition comprenant une association efficace de composant (I) et de composant (II) tels que définis dans la revendication 1, dans lequel les composants sont présents en quantités qui augmentent l'activité contre des maladies dues à des agents phytopathogènes et l'attaque par des insectes ou des représentants de l'ordre des Acariens.

7. Procédé selon la revendication 6, dans lequel le composant (I) et le composant (II) sont formulés dans une composition à libération lente, sous la forme de microcapsules.

8. Procédé selon la revendication 7, dans laquelle le composant (I) et le composant (II) sont formulés indépendamment sous la forme de microcapsules.

9. Procédé selon la revendication 8, dans lequel les microcapsules sont emballées dans un emballage double.

10. Procédé selon la revendication 1 ou la revendication 6, dans lequel un site qui a été attaqué par des champignons et des insectes ou risque d'être attaqué est traité par le composant (I) et le composant (II) simultanément ou en un ordre quelconque désiré, le même jour.

11. Composition comprenant une association efficace de composant (I) et de composant (II) tels que définis dans la revendication 1, dans laquelle les composants sont présents en quantités qui augmentent l'activité contre des maladies dues à des agents phytopathogènes et l'attaque par des insectes ou des représentants de l'ordre des acariens.

12. Composition selon la revendication 11, dans laquelle le rapport pondéral du composant (I) au composant (II) est compris entre 100:1 et 1:100.

13. Composition selon la revendication 12, pour la lutte contre des champignons phytopathogènes et des insectes phytophages.

14. Utilisation d'une composition telle que revendiquée dans l'une quelconque des revendications 11 à 13, dans un procédé de lutte contre des micro-organismes et des insectes ou des représentants de l'ordre des ^{a}cariens sur des plantes cultivées, selon la revendication 1.
